# EUROPEAN PATENT APPLICATION

(11) **EP 4 407 142 A2**
(43) Date of publication of application: **31.07.2024**
(21) Application number: 24178940.3
(22) Date of filing: 07.03.2019
(51) Int. Cl.: E21B 43/013

(54) **APPARATUS, SYSTEMS AND METHODS FOR OIL AND GAS OPERATIONS**

(30) Priority: 07.03.2018 GB 201803680
(62) Divisional of application: 19717347.9
(71) Applicant: Enpro Subsea Limited, Aberdeen AB10 1FW (GB)
(72) Inventor: Donald, Ian, Inverurie, AB61 7JB (GB); Reid, John, Perthshire Tayside, PH14 9SN (GB); McDonald, Craig, Aberdeen, AB32 6FE (GB)
(74) Representative: Lincoln IP

(57) **Abstract**

The invention provides an access jumper pulling head for accessing a flow system in a subsea oil and gas production installation comprising a subsea horizontal pull-in connection system, the access jumper pulling head. The access jumper pulling head comprises a body comprising a plurality of connectors and an access interface for providing an access point to the flow system. A first connector of the plurality of connectors is configured to connect the access jumper pulling head to a jumper flowline, a second connector of the plurality of connectors is configured to connect the access jumper pulling head to the horizontal pull-in connection system of the flow system, and the body defines at least one bore which fluidly connects at least one of the plurality of connectors to the access interface to provide a flow path between the access interface and the flow system. The access jumper pulling head is configured to be connected to the horizontal pull-in connection system of the flow system using a pull in tool.

## Description

The present invention relates to apparatus, systems and methods for oil and gas operations. In particular, the present invention relates to apparatus, systems and methods for performing fluid and/or mechanical intervention operations in oil and gas production or injection systems. The invention has particular application to subsea oil and gas operations, and aspects of the invention relate specifically to apparatus, systems and methods for fluid and mechanical intervention in subsea oil and gas production and injection infrastructure. The invention in one of its aspects relates to an apparatus, system and method of providing an intervention point which can be located adjacent to, integrated into or used in conjunction with a subsea horizontal connection system (for example, a subsea pull-in horizontal connection system).

### Background to the invention

In the field of oil and gas exploration and production, it is common to install an assembly of valves, spools and fittings on a wellhead for the control of fluid flow into or out of the well. A Christmas tree is a type of fluid manifold used in the oil and gas industry in surface well and subsea well configurations and have a wide range of functions, including chemical injection, well intervention, pressure relief and well monitoring. Christmas trees are also used to control the injection of water or other fluids into a wellbore to control production from the reservoir.

There are a number of reasons why it is desirable to access a flow system in an oil and gas production system. In the context of this specification, the term "fluid intervention" is used to encapsulate any method which accesses a flow line, manifold or tubing in an oil and gas production, injection or transportation system. This includes (but is not limited to) accessing a flow system for fluid sampling, fluid diversion, fluid recovery, fluid injection, fluid circulation, fluid measurement and/or fluid metering. This can be distinguished from full well intervention operations, which generally provide full (or near full) access to the wellbore. Full well intervention processes and applications are often technically complex, time-consuming and have a different cost profile to fluid intervention operations. It will be apparent from the following description that the present invention has application to full well intervention operations. However, it is an advantage of some aspects of the invention that full well intervention may be avoided, and therefore embodiments of the invention provide methods and apparatus for fluid intervention which do not require full well intervention processes.

Furthermore, it is also desirable to be able to access a flow system in an oil and gas production system for the purpose of performing mechanical intervention. In the context of this specification, the term "mechanical intervention" refers to all manner of mechanical well intervention procedures including pigging, coiled tubing and composite coiled tubing interventions.

International patent application numbers WO00/70185, WO2005/047646, and WO2005/083228 describe a number of configurations for accessing a hydrocarbon well via a choke body on a Christmas tree.

Although a choke body provides a convenient access point in some applications, the methods of WO00/70185, WO2005/047646, and WO2005/083228 do have a number of disadvantages. Firstly, a Christmas tree is a complex and carefully -designed piece of equipment. The choke performs an important function in production or injection processes, and its location on the Christmas tree is selected to be optimal for its intended operation. Where the choke is removed from the choke body, as proposed in the prior art, the choke must be repositioned elsewhere in the flow system to maintain its functionality. This compromises the original design of the Christmas tree, as it requires the choke to be located in a sub-optimal position.

Secondly, a choke body on a Christmas tree is typically not designed to support dynamic and/or static loads imparted by intervention equipment and processes. Typical loads on a choke body in normal use would be of the order of 0.5 to 1 tonnes, and the Christmas tree is engineered with this in mind. In comparison, a typical flow metering system as contemplated in the prior art may have a weight of the order of 2 to 3 tonnes, and the dynamic loads may be more than three times that value. Mounting a metering system (or other fluid intervention equipment) on the choke body therefore exposes that part of the Christmas tree to loads in excess of those that it is designed to withstand, creating a risk of damage to the structure. This problem may be exacerbated in deepwater applications, where even greater loads may be experienced due to thicker and/or stiffer components used in the subsea infrastructure.

In addition to the load restrictions identified above, positioning the flow intervention equipment on the choke body may limit the access available to large items of process equipment and/or access of divers or remotely operated vehicles (ROVs) to the process equipment or other parts of the tree.

Furthermore, modifying the Christmas tree so that the chokes are in non-standard positions is generally undesirable. It is preferable for divers and/or ROV operators to be completely familiar with the configuration of components on the Christmas tree, and deviations in the location of critical components are preferably avoided.

Another drawback of the prior art proposals is that not all Christmas trees have chokes integrated with the system; approaches which rely on Christmas tree choke body access to the flow system are not applicable to these types of tree.

WO2013/121212 describes an apparatus and system for accessing a flow system such as a subsea tree, which addresses drawbacks of choke-mounted flow access, by providing a flow access apparatus which can be used at a variety of access points away from the choke and optionally away from the subsea tree. The apparatus and methods of WO2013/121212 enable a range of fluid intervention operations, including fluid sampling, fluid diversion, fluid recovery, fluid injection, fluid circulation, fluid measurement and/or fluid metering.

WO2016/097717 also describes an apparatus and system for accessing a flow system which negates the drawbacks of choke-mounted flow access. In particular, WO2016/097717 provides a mutliple bore apparatus which facilitates fluid communication between one or more subsea process apparatus and the flow system in use.

### Summary of the invention

It is amongst the aims and objects of the invention to provide an apparatus, a system and a method of use for accessing a flow system in an oil and gas production installation, which is an alternative to the apparatus and methods described in the prior art.

It is amongst the aims and objects of the invention to provide apparatus, a system and a method of use for fluid intervention in an oil and gas production installation, which addresses one or more drawbacks of the prior art.

It is amongst the aims and objects of the invention to provide apparatus, a system and a method of use for mechanical intervention in an oil and gas production installation, which addresses one or more drawbacks of the prior art.

It is amongst the aims and objects of the invention to provide apparatus, a system and a method of use for fluid and/or mechanical intervention in an oil and gas production installation, which addresses one or more drawbacks of the prior art.

An object of the invention is to provide a flexible apparatus, system and method of use suitable for use with and/or retrofitting to industry standard or proprietary oil and gas production manifolds, including subsea trees, horizontal connection systems such as subsea pull-in horizontal connection systems, vertical connection systems and/or end terminations.

Further objects and aims of the invention will become apparent from the following description.

According to a first aspect of the invention there is provided an access apparatus for accessing a flow system in a subsea oil and gas production installation, the access apparatus comprising:
a body;
a plurality of connectors configured to connect the apparatus to the flow system; and
an access interface for providing an access point to the flow system;
wherein the body defines at least one path which connects at least one of the plurality of connectors to the access interface to provide at least one path between the access interface and the flow system; and
wherein at least one connector of the plurality of connectors is oriented with a longitudinal axis substantially horizontally, such that the at least one connector is configured to connect to a respective horizontally oriented connector of the flow system.

Preferably, the access interface has an axial orientation substantially perpendicular to the longitudinal axis of the at least one connector oriented in a substantially horizontal plane.

According to a second aspect of the invention there is provided a termination head for a jumper flowline of a subsea oil and gas production installation, the termination head comprising:
a body comprising a first connector configured to connect the termination head to a jumper flowline and a second connector configured to connect the termination head to the flow system; and
an access interface for providing an access point to the flow system;
wherein the termination head defines at least one bore which connects at least one of the plurality of connectors to the access interface to provide a path between the access interface and the flow system.

The termination head may be a modified jumper pull-in head, which may form part of a subsea horizontal pull-in connection system.

Embodiments of the second aspect of the invention may include one or more features of the first aspect of the invention or its embodiments, or vice versa.

According to a third aspect of the invention there is provided an access apparatus for accessing a flow system in a subsea oil and gas production installation, the access apparatus comprising:
a body;
a plurality of connectors configured to connect the apparatus to the flow system; and
an access interface providing an access point to the flow system;
wherein the body defines at least one bore which fluidly connects at least one of the plurality of connectors to the access interface to provide a path between the access interface and the flow system;
wherein a first connector of the plurality of connectors is oriented with a longitudinal axis in a substantially horizontal plane, such that the at least one connector is configured to connect to a respective horizontally oriented connector of the flow system;
wherein a second connector of the plurality of connectors forms part of a connection interface for a jumper flowline, the connection interface replicating a flow system connection interface;
and wherein the access apparatus is configured to be connected between the flow system connection interface and the jumper flowline.

The flow system connection interface may be a part of a subsea horizontal pull-in connection system.

The horizontally oriented connector of the flow system may form part of the connection interface of the flow system.

The access apparatus may be a termination head for a jumper flowline and/or a jumper pulling head for a jumper flowline.

The at least one bore may be a first bore which may be defined between the first connector and the access interface. The body may define at least one further bore, which may be a second bore defined between the second connector and the access interface.

The access interface may have an axial orientation substantially perpendicular to the longitudinal axis of the first connector.

The access interface may provide an interface for processing equipment, intervention apparatus and/or additional flow lines or connectors to be landed on and connected to the apparatus. Preferably, the access interface therefore enables a variety of wellbore and/or flow system intervention operations to be performed.

The horizontally oriented connector of the flow system may be a horizontal connector of a subsea manifold, a subsea tree and/or a subsea end termination. Alternatively, or in addition, the horizontally oriented connector of the flow system may be a a horizontal connection porch of a subsea manifold and/or a subsea Christmas tree.

The connection interface for a jumper flowline formed, or formed in part, by the second connector may replicate the horizontally oriented connector of the flow system.

The connection interface for a jumper flowline formed, or formed in part, by the second connector may replicate the outward interface of a horizontal connector of a subsea manifold and/or a subsea Christmas tree.

By replicating the interface of the connector of the flow system connection interface, to which the jumper flowline would typically be directly connected to, the access apparatus may provide a point to which the jumper flowline can connect thereto without requiring any modifications and without requiring the use of any specialised or modified tools to facilitate installation. Where a jumper flowline has been in connection with the horizontally oriented connector of the flow system prior to installation of the access apparatus, the replicated interface provided by the access apparatus may enable the jumper flowline to connect to the access apparatus simply, in the same manner that it was previously connected to the flow system connection interface.

The second connector may be oriented with a longitudinal axis substantially vertically, such that it may be configured to connect to a respective vertically oriented, or vertically oriented in part, jumper flowline.

The at least one bore may be configured to permit the passage of mechanical intervention equipment therethrough. The at least one bore may comprise a bend, which may be a 5D bend. The at least one bore may be configured to permit the passage of a pipeline pig from a pig launcher apparatus therethrough.

The access apparatus may be provided with a frame which may be configured to support the apparatus.

The access apparatus may be provided with a sliding base, wheels and/or any other appropriate means which may aid its movement subsea.

The access apparatus may comprise elongate guide members which may correspond to the position of receptacles on the horizontally oriented connector of the flow system. The elongate guide members of the access apparatus may be configured to extend into the receptacles on the horizontally oriented connector of the flow system when the components are connected.

Alternatively, or in addition, the access apparatus may comprise recesses which correspond to the position of elongate guide probes of a pull-in-tool and of receptacles on the horizontally oriented connector of the flow system.

Embodiments of the third aspect of the invention may include one or more features of any of the first to second aspects of the invention or their embodiments, or vice versa.

According to a fourth aspect of the invention there is provided a method of installing an access apparatus between the components of a subsea horizontal connection system, the method comprising:
providing an access apparatus comprising a plurality of connectors configured to connect the apparatus to the flow system and an access interface for providing an access point to the flow system;
disconnecting a jumper flowline from a horizontally oriented connector of the flow system; providing the flow access apparatus at a subsea location proximate the location of the horizontally oriented connector of the flow system;
bringing the access apparatus into contact with the horizontally oriented connector of the flow system such that a first connector of the plurality of connectors of the access apparatus is brought into contact with a flow opening in the horizontally oriented connector; and
re-connecting the jumper flowline to the subsea horizontal connection system, by bringing it into contact with the access apparatus such that a second connector of the plurality of connectors of the access apparatus is brought into contact with a flow opening in the jumper flowline.

The subsea horizontal connection system may be a pull-in horizontal connection system.

The horizontally oriented connector of the flow system may form part of a connection interface of the flow system.

The steps of disconnecting the jumper flowline, providing the access apparatus at a subsea location, bringing the access apparatus into contact with the horizontally oriented connector of the flow system and re-connecting the jumper flowline may be carried out at least by Remotely Operated Vehicles (ROVs), winches, hydraulic cylinder tools, Pull in Tools (PITs) and/or any other necessary installation tools and/or a combination thereof.

The access apparatus may comprise elongate guide members which may correspond to the position of receptacles on the horizontally oriented connector of the flow system. The method may comprise bringing the access apparatus into contact with the horizontally oriented connector of the flow system such that the elongate guide members of the access apparatus extend into the corresponding receptacles of the horizontally oriented connector of the flow system.

Alternatively, or in addition, the access apparatus may comprise recesses which correspond to the position of elongate guide probes of a pull in tool and of receptacles on the horizontally oriented connector of the flow system. The method may comprise docking the access apparatus on the pull in tool such that the elongate guide probes may enter and extend through the recesses of the access apparatus. The method may comprise bringing the access apparatus into contact with the horizontally oriented connector of the flow system such that the elongate guide probes of the pull in tool extend into the corresponding receptacles of the horizontally oriented connector of the flow system. The method may comprise un-docking and removing the pull-in-tool from the access apparatus and the horizontally oriented connector of the flow system.

Embodiments of the fourth aspect of the invention may include one or more features of any of the first to fourth aspects of the invention or their embodiments, or vice versa.

According to a fifth aspect of the invention, there is provided a subsea horizontal connection installation comprising:
a flow system comprising a horizontally oriented connector forming part of the flow system and a jumper flowline; and
an access apparatus comprising a body, a plurality of connectors configured to connect the apparatus to the flow system and an access interface for providing an access point to the flow system;
wherein the body defines at least one bore which fluidly connects at least one of the plurality of connectors to the access interface to provide a path between the access interface and the flow system;
wherein a first connector of the plurality of connectors of the access apparatus is connected to the horizontally oriented connector of the flow system; and wherein a second connector of the plurality of connectors of the access apparatus is connected to the jumper flowline.

The installation may further comprise processing equipment, intervention apparatus and/or additional flow lines or connectors connected to the access interface.

Embodiments of the fifth aspect of the invention may include one or more features of any of the first to third aspects of the invention or their embodiments, or vice versa.

According to a sixth aspect of the invention there is provided a method of installing an access apparatus between the components of a subsea pull-in horizontal connection system, the method comprising:
providing an access apparatus comprising a plurality of connectors configured to connect the apparatus to the flow system and an access interface for providing an access point to the flow system;
disconnecting a jumper pull-in head from a horizontal connection porch of a subsea manifold;
providing the flow access apparatus at a subsea location proximate the location of the horizontal connection porch, wherein the flow access apparatus comprises elongate guide members which correspond to the position of receptacles on the horizontal connection porch;
bringing the access apparatus into contact with the horizontal connection porch, such that the elongate guide members of the access apparatus extend into the corresponding receptacles of the horizontal connection porch and such that a first connector of the plurality of connectors of the flow access apparatus is brought into contact with a flow opening in the horizontal connection porch; and
re-connecting the jumper pull-in head to the subsea pull-in horizontal connection system, by bringing it into contact with the access apparatus such that a second connector of the plurality of connectors of the access apparatus is brought into contact with a flow opening in the jumper pulling head.

Embodiments of the sixth aspect of the invention may include one or more features of any of the first to fifth aspects of the invention or their embodiments, or vice versa.

According to a seventh aspect of the invention there is provided a method of installing an access apparatus between the components of a subsea pull-in horizontal connection system, the method comprising:
providing an intermediate flow access apparatus comprising a plurality of connectors configured to connect the apparatus to the flow system and an access interface for providing an access point to the flow system;
disconnecting a jumper pulling head from a of a horizontal connection porch of a subsea manifold;
providing a pull-in-tool comprising elongate guide probes;
providing the access apparatus at a subsea location proximate the location of the horizontal connection porch, wherein the access apparatus comprises recesses which correspond to the position of the elongate guide probes of the pull-in-tool and of receptacles on the horizontal connection porch;
docking the access apparatus on the pull-in-tool such that the elongate guide probes enter and extend through the recesses of the access apparatus;
bringing the access apparatus into contact with the horizontal connection porch, such that the elongate guide probes of the pull-in-tool extend into the corresponding receptacles of the horizontal connection porch and such that a first connector of the plurality of connectors of the access apparatus is brought into contact with a flow opening in the horizontal connection porch;
un-docking and removing the pull-in-tool from the access apparatus and the horizontal connection porch; and
re-connecting the jumper pulling head to the subsea pull-in horizontal connection system, by bringing it into contact with the access apparatus such that a second connector of the plurality of connectors of the access apparatus is brought into contact with a flow opening in the jumper pulling head.

Embodiments of the seventh aspect of the invention may include one or more features of any of the first to sixth aspects of the invention or their embodiments, or vice versa.

According to an eighth aspect of the invention there is provided an access jumper pulling head for a jumper flowline, the jumper pulling head comprising:
a body comprising a plurality of connectors, wherein the plurality of connectors comprises a first connector configured to connect the jumper pulling head to a jumper flowline and a second connector configured to connect the jumper pulling head to the flow system; and
an access interface providing an access point to the flow system;
wherein the jumper pulling head defines at least one bore which connects at least one of the plurality of connectors to the access interface to provide a path between the access interface and the flow system; and
wherein the jumper pulling head is configured to connect the jumper flowline to the flow system in a horizontal connection system.

Embodiments of the eighth aspect of the invention may include one or more features of any of the first to seventh aspects of the invention or their embodiments, or vice versa.

According to a ninth aspect of the invention there is provided a method of installing a jumper pulling head as part of a subsea pull-in horizontal connection system, the method comprising:
providing a jumper pulling head comprising a first connector configured to connect the jumper pulling head to a jumper flowline and a second connector configured to connect the jumper pulling head to the flow system, and an access interface providing an access point to the flow system;
connecting a jumper flowline to the first connector of the flow access jumper pulling head; providing a flow access jumper pulling head to a subsea location proximate the location of a horizontal connection porch of a subsea manifold; and
bringing the access jumper pulling head into contact with the horizontal connection porch such that the second connector is brought into contact with a flow opening in the horizontal connection porch.

Embodiments of the ninth aspect of the invention may include one or more features of any of the first to eight aspects of the invention or their embodiments, or vice versa.

According to a tenth aspect of the invention there is provided an access apparatus for accessing a flow system in a subsea oil and gas production installation, the flow access apparatus comprising:
a body;
a plurality of connectors configured to connect the apparatus to the flow system; and
a flow access interface for providing an access point to the flow system for a subsea processing and/or intervention apparatus;
wherein the body defines at least one flow path which fluidly connects at least one of the plurality of connectors to the flow access interface to provide at least one flow path between the flow access interface and the flow system; and
wherein at least one connector of the plurality of connectors is oriented with a longitudinal axis substantially vertically, such that the at least one connector is configured to connect to a respective vertically oriented connector of the flow system.

Embodiments of the tenth aspect of the invention may include one or more features of any of the first to ninth aspects of the invention or their embodiments, or vice versa.

According to an eleventh aspect of the invention there is provided a termination head for a jumper flowline, the termination head comprising:
a body comprising a plurality of connectors, wherein the plurality of connectors comprises a first connector configured to connect the termination head to a jumper flowline and a second connector configured to connect the termination head to the flow system; and
an access interface providing an access point to the flow system;
wherein the termination head defines at least one bore which connects at least one of the plurality of connectors to the access interface to provide at least one path between the flow access interface and the flow system.

Embodiments of the eleventh aspect of the invention may include one or more features of any of the first to tenth aspects of the invention or their embodiments, or vice versa.

According to a twelfth aspect of the invention there is provided an access apparatus for accessing a flow system in a subsea oil and gas production installation, the access apparatus comprising:
a body;
a plurality of connectors configured to connect the apparatus to the flow system; and
an access interface for providing an access point to the flow system for a subsea mechanical intervention apparatus;
wherein the body defines at least one intervention path which connects at least one of the plurality of connectors to the flow access interface to provide a path between the flow access interface and the flow system; and
wherein the at least one path is configured to permit the passage of mechanical intervention equipment through the path.

The path may comprise a bend, which may comprise a 5D bend.

Embodiments of the twelfth aspect of the invention may include one or more features of any of the first to eleventh aspects of the invention or their embodiments, or vice versa.

According to a thirteenth aspect of the invention there is provided an access apparatus for providing pigging access to flow system in a subsea oil and gas production installation, the access apparatus comprising:
a body;
a plurality of connectors configured to connect the apparatus to the flow system; and
an access interface for providing an access point to the flow system for a pig launcher apparatus;
wherein the body defines at least one flow path which fluidly connects at least one of the plurality of connectors to the access interface to provide at least one flow path between the access interface and the flow system; and
wherein the at least one flow path is configured to permit the passage of a pipeline pig from the pig launcher apparatus therethrough.

Embodiments of the thirteenth aspect of the invention may include one or more features of any of the first to twelfth aspects of the invention or their embodiments, or vice versa.

According to a fourteenth aspect of the invention there is provided a method of accessing a flow system in a subsea oil and gas production installation, the method comprising:
providing an access apparatus comprising a body, a plurality of connectors connecting the apparatus to the flow system and an access interface for providing an access point to the flow system;
wherein the body defines at least one bore which fluidly connects at least one of the plurality of connectors to the access interface to provide a path between the access interface and the flow system; and
wherein a first connector of the plurality of connectors is connected to a connector of the flow system and a second connector of the plurality of connectors is connected to a jumper flowline of the flow system;
connecting a piece of processing equipment and/or an intervention apparatus to the access interface; and
performing wellbore and/or flow system intervention operations via the processing equipment and/or intervention apparatus and the access apparatus.

Embodiments of the fourteenth aspect of the invention may include one or more features of any of the first to thirteenth aspects of the invention or their embodiments, or vice versa.

### Brief description of the drawings

There will now be described, by way of example only, various embodiments of the invention with reference to the drawings, of which:
Figure1A is a schematic a side view of a standard subsea pull-in horizontal connection system according to the prior art;
Figures 1B is a schematic side view of the subsea pull-in horizontal connection system of Figure 1A, incorporating an intermediate flow access apparatus according to an embodiment of the invention;
Figures 1C and 1D show schematically sequential steps for a method of installation of the intermediate flow access apparatus of Figure 1B;
Figure 2 is a side view of a part of the intermediate flow access apparatus of Figure 1;
Figures 3A and 3B are schematic side views of a flow access connector for a jumper flowline according to an embodiment of the invention;
Figure 4 is a process and instrument diagram showing schematically a flow access jumper pulling head in a mechanical intervention set-up in accordance with an embodiment of the invention; and
Figure 5 is a process and instrument diagram showing schematically a flow access jumper pulling head in a mechanical intervention set-up in accordance with an alternative embodiment of the invention.
Figure 6A is a perspective view of a flow access connector according to an embodiment of the invention and Figure 6B is a process and instrument diagram showing schematically the flow access connector of Figure 6A;
Figure 7A is a perspective view of the flow access connector of Figures 6A and 6B incorporated into a subsea connection set-up and Figure 7B is a process and instrument diagram showing schematically set-up of Figure 7A; and
Figure 8 is a process and instrument diagram showing schematically a flow access connector in accordance with an embodiment of the invention.

### Detailed description of preferred embodiments

As noted above, aspects of the invention have particular application to subsea pull-in horizontal connection systems, and embodiments of the invention are described and illustrated in that context. However, it will be appreciated that the invention and its principles have application to bespoke, industry standard or proprietary oil and gas production manifolds, including subsea trees, other horizontal connection systems (including a range of proprietary subsea pull-in horizontal connection systems) vertical connection systems and/or end terminations.

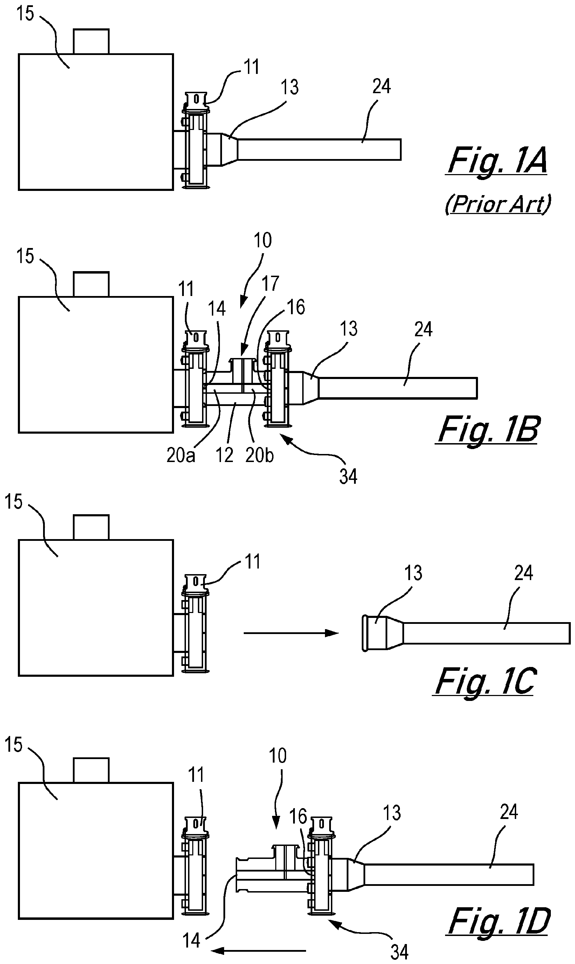

Figure 1A shows a made up standard subsea pull-in horizontal connection system, according to the prior art. The horizontal connection is made up between two main components: a horizontal connector of a subsea Christmas tree and a horizontal connector of a jumper flowline, shown at 11 and 13, respectively.

The horizontal connector 11 comprises a flowline (not shown) which is fluidly connected to a flowline, or flowlines, of the subsea Christmas tree 15. A horizontally deployed jumper flowline 24 is terminated in the jumper flowline connector 13.

According to a first embodiment of the present invention, the standard subsea pull-in horizontal connection system of Figure 1A is retrofitted to provide an intermediate flow access apparatus between the main components of the horizontal connection. This provides a convenient flow access point for the subsea flow system.

Figure 1B shows the intermediate flow access apparatus 10 positioned between the horizontal connector 11 of the subsea Christmas tree 15 and the jumper flowline connector 13 of the jumper flowline 24. The body of the intermediate flow access apparatus 10 has been shown as transparent in parts, in order to more clearly display the flow paths within the apparatus. The flow access apparatus 10 comprises a main body 12 and two connectors 14, 16. The body 12 further defines a flow access interface, shown generally at 17, which provides an access point to the flow system into which the apparatus is incorporated. A flow path 20a, 20b is defined between each connector 14, 16 and the flow access interface 17, respectively.

The connector 14 of the intermediate flow access apparatus 10 is fluidly connected to the horizontal connector 11 of the subsea Christmas tree 15 and therefore to the flowline, or flowlines, of the subsea Christmas tree 15. In addition, the connector 13 of the jumper flowline 24 is fluidly connected to connector 16 of the flow access apparatus 10. As such, both the jumper flowline 24 and a flowline (not shown) of the subsea Christmas tree 15 are in fluid communication with the flow access interface 17 which is provided by the intermediate flow access apparatus 10.

The intermediate flow access apparatus 10 also comprises a duplicate interface 34 which substantially replicates the outward interface of the horizontal connector 11 of the subsea Christmas tree 15, to which the jumper flowline connector 13 was originally intended to be connected. The duplicate interface 34 which is provided by the intermediate flow access apparatus 10 enables the jumper flowline connector 13 to connect to the flow access apparatus 10 simply, without requiring any modifications and without requiring the use of any specialised or modified tools to facilitate installation.

Although an intermediate flow access apparatus 10 of this type would be suitable for use in many different types of subsea developments, it has particular applicability to "brownfield" developments (or existing oilfield infrastructure) as its configuration facilitates easy retrofitting of a standard subsea horizontal connection to include the flow access apparatus 10 as an intermediary piece of equipment between the existing connection components.

Installation of the intermediate flow access apparatus 10 within a pre-existing subsea horizontal connection (such as that which is shown in Figure 1A) is briefly described with reference to Figures 1C and 1D.

The installation sequence begins by firstly disconnecting the existing jumper flowline connector 13, together with the jumper flowline 24, from the horizontal connector 11 of the subsea Christmas tree 15. The jumper connector 13 and flowline 24 are not removed altogether, but the assembly is simply dragged away from the horizontal connector 11 by a distance which is sufficient to provide an area of clearance between the two for installation of the intermediate flow access apparatus 10 therebetween. Detachment and movement of the jumper connector 13 and flowline 24 assembly is in the direction indicated by the arrow in Figure 1C.

With the jumper connector 13 and flowline 24 assembly disconnected, the intermediate flow access apparatus 10 is deployed subsea, and lowered towards the location of the horizontal connector 11. The jumper connector 13 of the jumper flowline 24 is then connected to the interface 34 of the intermediate flow access apparatus 10 such that the connector 16 of the apparatus 10 and the connector 13 are in fluid communication.

The intermediate flow access apparatus 10, together with the jumper connector 13 and the jumper flowline, is then horizontally pulled in towards the horizontal connector 11 of the subsea Christmas tree 15 using winches and any other suitable pull in tooling (PIT), in the direction indicated by the arrow in Figure 1D, and the connector 14 of the apparatus 10 is fluidly connected to the horizontal tree connector 11.

The installation sequence described above may be facilitated and/or provided by Remotely Operated Vehicles (ROVs), winches, PITs and any other necessary installation tools.

The access apparatus of the invention may be used with a proprietary subsea pull-in horizontal connection system according to the prior art. In one embodiment, not illustrated, a horizontal connection is made up between two main components: a horizontal connection porch and a jumper pulling head. The horizontal connection porch comprises a flowline which forms a horizontal connector of a subsea Christmas tree.

A horizontally deployed jumper flowline is terminated in a connector of the jumper pulling head. For installation, the pulling head is deployed subsea, and horizontally pulled in towards the connection porch using winches and any other suitable PIT, which may be facilitated and/or provided by a ROV, such that a connection is made up between the two. The porch typically comprises two guide receptacles which accept elongate guide members of the pulling head when the two components are connected, which are connected to, and horizontally extend from, the base of the jumper pulling head.

It will be appreciated that additional flowlines, such as gas lift lines, may exist within the jumper pulling head, which also extend between the porch (and ultimately the Christmas tree) and the pulling head, via the connector.

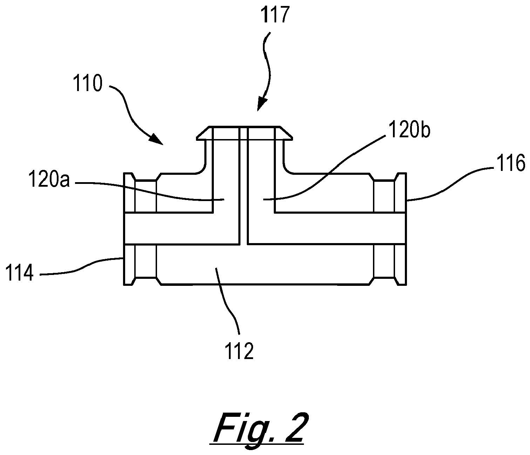

According to an embodiment of the present invention, the proprietary subsea pull-in horizontal connection system described above is retrofitted to provide an intermediate flow access apparatus between the main components of the horizontal connection. This provides a convenient flow access point for the subsea flow system. A flow access apparatus suitable for use with a standard subsea pull-in horizontal connection can be described, for a retrofitted subsea pull-in horizontal connection including an intermediate flow access apparatus in accordance with an embodiment of the invention. The main body of the intermediate flow access apparatus which is incorporated into the subsea pull-in horizontal connection described above is shown in more detail in Figure 2.

The intermediate flow access apparatus 110 is positioned between the horizontal connection porch and the jumper pulling head of the subsea pull-in horizontal connection. The body of the intermediate flow access apparatus 110 has been shown as transparent in parts, in order to more clearly display the flow paths within the apparatus. The flow access apparatus, shown generally at 110, comprises a body main 112 and two connectors 114, 116. The body 112 further defines a flow access interface, shown generally at 117, which provides an access point to the flow system into which the apparatus is incorporated. A flow path 120a, 120b is defined between each connector 114, 116 and the flow access interface 117, respectively.

The intermediate flow access apparatus 110 is configured to be incorporated into the subsea horizontal connection system of a subsea flow system, as an intermediate component between components of the horizontal connection system, to provide an intervention point at the location of the connection. As such, the flow access interface 117 provides a dual bore access point for subsea processing and/or intervention apparatus to access the flow system. In use, the flow access interface 117 provides a convenient single interface for processing equipment, intervention apparatus and/or additional flow lines or connectors to be landed on the apparatus and is therefore a convenient means for enabling a variety of wellbore intervention operations. The incorporation of the intermediate flow access apparatus 110 between the components of a horizontal connection system may be facilitated by additional standard connection components (for example, bolts and flanges) which are not shown and/or described in this specification.

The connector 114 of the intermediate flow access apparatus 110 is fluidly connected to a connector of the horizontal connection porch (and therefore to a flowline which is horizontally connected to a horizontal connection point of a subsea Christmas tree). In addition, the connector of the jumper flowline, which is terminated within the jumper pulling head, is fluidly connected to a connector 116 of the flow access apparatus 110. As such, both the jumper flowline and a flowline of the subsea Christmas tree (not shown) are in fluid communication with the flow access interface 117 which is provided by the intermediate flow access apparatus 110.

The intermediate flow access apparatus 110 comprises, on the side facing the jumper pulling head, a duplicate interface (not shown) which substantially replicates the outward interface which is provided by the horizontal connection porch to which the pulling head was originally intended to be connected. The duplicate mechanical interface which is provided by the intermediate flow access apparatus 110 enables the jumper pulling head to connect to the flow access apparatus 110 simply, in the same manner that it was previously connected to the porch, without requiring any modifications and without requiring the use of any specialised or modified tools to facilitate installation.

The intermediate flow access apparatus 110 is provided with a frame (not shown), and the main body 112 of the intermediate flow access apparatus 110 is attached to the frame via a bracket. The frame also provides support to the duplicate mechanical flow interface.

In addition, the intermediate flow access apparatus 110 is also provided with a pair of elongate guide members (not shown) which are also attached to the frame. The elongate guide members of the intermediate flow access apparatus 110 extend into the two guide receptacles (not shown) on the horizontal connection porch.

Although the intermediate flow access apparatus 110 is suitable for use in many different types of subsea developments, it has particular applicability to "brownfield" developments (or existing oilfield infrastructure) as its configuration facilitates easy retrofitting of a subsea horizontal connection to include the flow access apparatus 110 as an intermediary piece of equipment between the existing connection components.

The longitudinal axis of the connector 114 is oriented in the horizontal plane to connect to a horizontal flowline of the flow system. The longitudinal axis of the connector 116 is similarly oriented in the horizontal plane to connect to a horizontal flowline of the flow system; however, it will be appreciated that in alternative embodiments of the invention the longitudinal axis of one or both of the connectors may instead be oriented in the vertical plane to connect to a vertical flowline of the flow system.

In addition, although the apparatus shown comprises two flow paths 120a, 120b and consequently defines a dual bore interface 118, it may instead be provided with only one flow path between the connectors and the interface to produce a single bore interface. Alternatively, the apparatus may be provided with more than two connectors and/or more than two flow paths between the connectors and the interface, thus defining a multi-bore flow access interface.

It will be described how an intermediate flow access apparatus according to an embodiment of the invention may be installed within a proprietary subsea pull-in horizontal connection system.

The installation sequence begins by firstly disconnecting the existing jumper pulling head from the horizontal connection porch. The jumper pulling head need not be removed to a remote location; it must simply be dragged away from the porch by a sufficient amount such that an area of clearance exists between the two for installation of the intermediate flow access apparatus therebetween.

With the pulling head disconnected, the intermediate flow access apparatus is deployed subsea, and lowered towards the location of the connection porch. This may be done using buoyancy alone. However, typically, the intermediate flow access apparatus is connected to an installation tool, both being lowered by a wire.

Once the intermediate flow access apparatus has been lowered by the full amount required, an ROV engages the intermediate flow access apparatus (and/or the installation tool) and manoeuvres it in order to position it in line with the connection porch. Once aligned, the ROV pushes the intermediate flow access apparatus towards the porch, such that the ends of elongate guide members - which, in this embodiment, are provided by and on the intermediate flow access apparatus - begin to enter the guide receptacles of the porch. For this purpose, the intermediate flow access apparatus may be provided with a sliding base, or it may be provided with wheels on its base or any other appropriate means to aid its movement subsea.

The ROV continues to push the intermediate flow access apparatus towards the porch, until it reaches a point at which the distance between the intermediate flow access apparatus and the porch is relatively small.

It is important that the final connection between the intermediate flow access apparatus and the porch is made up with care, to ensure the integrity of the connection, and of the two components. As such, instead of continuing to push the flow access apparatus using an ROV, a hydraulic cylinder tool is used to guide the flow access apparatus in to place. A hydraulic cylinder tool (which has been deployed subsea to the location of the apparatus using an ROV or any other suitable means) is fitted between the flow access apparatus and the porch, before making up the connection between the two. The hydraulic cylinder tool is fitted in its stroked-open state, with the cylinder end of the tool being attached to the installation tool on the flow access apparatus and with the piston end of the tool being attached to the porch. Projections on the installation tool and the porch, respectively, correspond to recesses in the hydraulic cylinder tool for secure attachment thereon.

The hydraulic cylinder tool is operated by an ROV to stroke closed. The movement which is imparted to the flow access apparatus by operation of the hydraulic cylinder tool is smooth and slow and accurate, owing to the connection between the cylinder tool and both components of the horizontal connection. When the cylinder tool is stroked closed, the connection is made up between a connector of the intermediate flow access apparatus and a connector of the horizontal connection porch.

Once a connection has been made between the intermediate flow access apparatus and the horizontal connection porch the hydraulic cylinder tool is removed from the components and retrieved back to the surface by an ROV. Likewise, the installation tool is disconnected from the flow access apparatus using an ROV and is also retrieved to the surface. An ROV also operates a clamp on the horizontal connection porch to clamp the porch to the access apparatus and finalise the connection between the two components.

The intermediate flow access apparatus comprises, on the side facing the jumper pulling head, a duplicate interface which substantially replicates the outward mechanical flow interface which is provided by the porch to which the pulling head was originally connected. This enables the jumper pulling head to connect to the flow access apparatus simply, in the same manner that it was previously connected to the porch, without requiring any modifications. The flow access apparatus is connected to the duplicate mechanical flow interface and the elongate guide members via a bracket.

Finally, using conventional methods (including winching and/or the use of hydraulic cylinder tools facilitated by ROVs), the jumper pulling head is re-connected to the horizontal connection system such that a connector of a jumper flowline which is terminated within the jumper pulling head is fluidly connected to a connector of the flow access apparatus, via the duplicate mechanical flow interface. A ROV is operated to clamp the components together and finalise the connection between the jumper pulling head and the flow access apparatus.

With the horizontal pull-in connection complete, the intermediate flow access apparatus provides a flow access interface, which provides a dual bore access point for subsea processing and/or intervention apparatus to access the flow system. Fluid communication is provided between the subsea Christmas tree and the flow access apparatus, via the connection porch. Similarly, fluid communication is provided between the jumper flowline and the flow access apparatus via the pulling head.

An installation of an intermediate flow access apparatus according to an alternative embodiment of the invention is now described. In this embodiment, the flow access apparatus is not provided with its own elongate guide members. Instead, it is connected to a frame which comprises a pair of throughbores formed from hollow cylindrical members, corresponding to the position of guide receptacles on the horizontal connection porch.

As with the previous embodiment, the existing jumper pulling head is disconnected and moved away from the horizontal connection porch to create an area of clearance between the two, for installation of the intermediate flow access apparatus therebetween. With the pulling head disconnected, the intermediate flow access apparatus is connected to an installation tool at the surface and is deployed subsea and lowered towards the location of the connection porch by conventional methods.

When the intermediate flow access apparatus reaches an appropriate location subsea, a modified Pull in Tool (PIT) with extra-long guide members is deployed subsea to the location of the apparatus.

The modified PIT comprises winch lines which are attached, at their free ends, to the horizontal connection porch. The PIT is then pulled away from the horizontal connection porch, with the winch lines simultaneously extending, such that it sits behind the intermediate flow access apparatus and such that the extra-long guide members are aligned with the recesses in the frame of the flow access apparatus.

The winch is operated (by an ROV or otherwise) to initiate horizontal movement of the PIT, towards the porch. In doing so, the probes of the PIT extend into and through the recesses in the frame of the flow access apparatus such that the flow access apparatus is docked on to the PIT, thus effecting horizontal movement of the flow access apparatus.

The winch continues to operate until the members of the PIT extend into the guide receptacles in the porch, and until a connection is made up between a connector of the intermediate flow access apparatus and a connector of the horizontal connection porch. An ROV operates a clamp on the horizontal connection porch to clamp the porch to the access apparatus and finalise the connection.

The installation tool which was attached to the apparatus is removed and recovered to the surface.

The PIT is now re-used to re-connect the jumper pulling head to the horizontal connection system. With the free ends of the winch lines attached to either the horizontal connection porch (or to the intermediate flow access apparatus), the PIT is again moved away from the horizontal connection porch and the and the intermediate flow access apparatus such that the extra-long guide members of the PIT are retracted from the guide receptacles in the porch and the recesses in the frame of the flow access apparatus. The PIT moves to the far end of the jumper pulling head (i.e. to the end which is horizontally farthest away from the other components in the horizontal connection system) and engages with it (via the probes or otherwise) to initiate horizontal movement of the pulling head towards the flow access apparatus.

The jumper pulling head is re-connected to the horizontal connection system such that a connector of a jumper flowline, which is terminated within the jumper pulling head, is fluidly connected to a connector of the flow access apparatus, via the duplicate mechanical flow interface. An ROV is operated to clamp the components together and finalise the connection between the jumper pulling head and the flow access apparatus.

After a subsea horizontal connection has been made, flow tests are performed to ensure the integrity and effectiveness of the connection before a processing and/or intervention apparatus is connected to the flow access interface.

It will be appreciated that, although only one intermediate flow access apparatus is shown and described within the above examples, additional flowlines may exist between the horizontal connection porch (ultimately the Christmas tree) and the jumper pulling head which may also be provided with an intermediate connector apparatus.

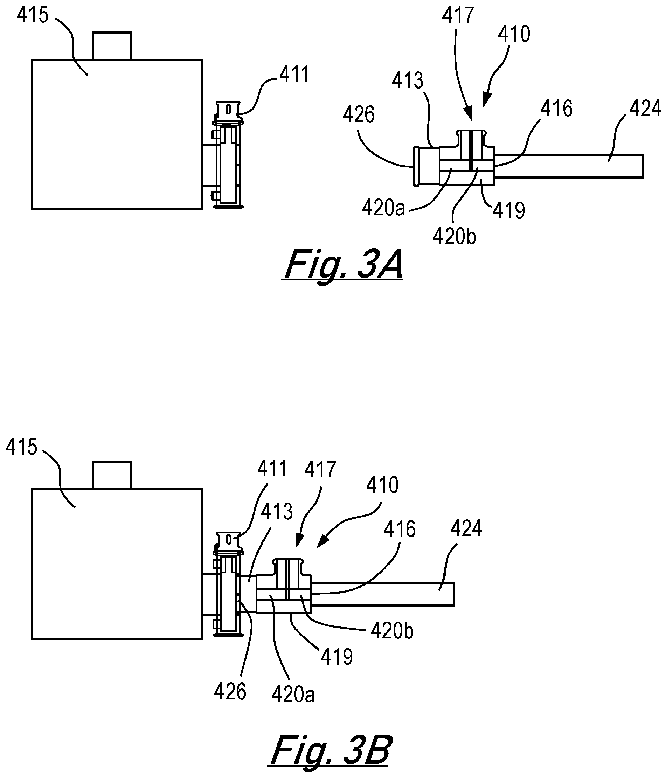

Figures 3A and 3B show an apparatus according to alternative embodiment of the invention. These figures show, generally at 410, an adapted flow access connector for a jumper flowline. The body of the flow access component of the jumper flowline connector are shown as transparent in parts, in order to more clearly display its features. In Figure 3A, the adapted flow access connector and jumper flowline are shown disconnected from a horizontal connector 411 of a subsea Christmas tree 415. In Figure 3B, horizontal connection is made up: as such, the adapted flow access connector and jumper flowline are shown connected to the horizontal connector 411 of the subsea Christmas tree 415.

The jumper flowline connector 413 is connected, at one end, to the jumper flowline 424 by connector 416. The jumper flowline connector 413 further comprises a connector 426 to facilitate the connection between the jumper flowline 424 and a horizontal connector 411 of a subsea Christmas tree 415. The configuration of the jumper flowline connector 413 facilitates a horizontal connection between the jumper flowline 424 and the flow system of the subsea Christmas tree via the connector 411.

A flow access hub 419 is incorporated into the jumper flowline connector 413, to provide a convenient flow access interface, shown generally at 417, on the connector 413, through which subsea process or intervention apparatus may gain access to the flow system. A flow path 420a, 420b is defined between each connector 426, 416 and the flow access interface 417, respectively, such that the jumper flowline 424 and the flow system of the subsea tree 415 are fluidly connected to the flow access interface 417 when the connection is made up.

A modified jumper flowline connector 413 of this type, which has been adapted to provide a flow access interface, is suitable for use in many different types of subsea developments. However, it has particular applicability to "greenfield" developments (or new oilfield infrastructure) as its configuration facilitates the provision of a flow access point integrated into the components which are required to make up a subsea horizontal connection, without the requirement to provide additional components or equipment.

An apparatus according to alternative embodiment of the invention is a flow access termination head for a jumper flowline.

The termination head comprises a connector for connection to a jumper flowline, and further comprises a connector to facilitate the connection between the jumper flowline and a subsea flow system. The jumper flowline extends into the body of the termination head, to arrive at the connector. In this particular example, the configuration of the termination head facilitates a horizontal connection between the jumper flowline and the flow system via the connector, the longitudinal axis of which is oriented in the horizontal plane for connection to a horizontal flow line of the flow system.

A flow access hub is incorporated into the termination head, to provide a convenient flow access interface on the termination head, through which subsea process or intervention apparatus may gain access to the flow system. A flow path is defined between each connector and the flow access interface, respectively, such that the jumper flowline and the flow system to which the termination head is connected to via connector are fluidly connected to the flow access interface.

Typically, such termination heads which are used in subsea flowline connections do not include a means for accessing the flow system, and thus for conveniently performing intervention and/or processing operations. However, accessing the flow system at the location of a horizontal connection which incorporates such a jumper termination head has a number of advantages. A modified termination head of this type, which has been adapted to provide a flow access interface, is suitable for use in many different types of subsea developments. However, it has particular applicability to "greenfield" developments (or new oilfield infrastructure) as its configuration facilitates the provision of a flow access point integrated into the standard components which are required to make up a subsea horizontal connection, without the requirement to provide additional components or equipment.

It will be appreciated that although only one flow access hub is shown to be incorporated within the modified termination head described above, additional flowlines may exist within the modified termination head which may also be provided with a flow access interface in the same manner.

In an alternative embodiment of the invention, the flow access termination head for a jumper flowline is a jumper pulling head for horizontal connection with a subsea Christmas tree. A horizontal connection porch is directly and fluidly connected to a horizontal connection point of the Christmas tree. The pulling head comprises a connector for connection to a jumper flowline, and further comprises a connector to facilitate the connection between the jumper flowline and the subsea flow system (i.e. via the subsea Christmas tree). The jumper flowline extends into the body of the jumper pulling head, to arrive at the connector. In this particular example, the configuration of the jumper pulling head facilitates a horizontal connection between the jumper flowline and the Christmas tree via the connector, the longitudinal axis of which is oriented in the horizontal plane for connection to a horizontal flow opening of the Christmas tree.

A flow access apparatus is incorporated into the jumper pulling head, to provide a convenient flow access interface on the pulling head, through which subsea process or intervention apparatus may gain access to the flow system. A flow path is defined between each connector and the flow access interface, respectively, such that the jumper flowline and the Christmas tree to which the pulling head is connected to via connector are fluidly connected to the flow access interface.

In use, the jumper pulling head may have a process and/or intervention apparatus mounted upon the flow access interface. The flow access jumper pulling head is also provided with a protection structure, which can be installed upon the jumper pulling head and around the process and/or intervention apparatus to protect the process and/or intervention apparatus from the harsh subsea environment.

A protection structure for a flow access jumper pulling head may be installed as follows. A made-up horizontal pull-in connection system incorporates a modified flow access jumper pulling head which comprises a protection structure. The protection structure has a closed condition, and the purpose of the protection structure is to protect any subsea process or intervention apparatus which may be connected to the flow access interface from the subsea environment.

The protection structure comprises two parts, each part comprising an elongate member which extends into each of the receptacles in the horizontal connection porch to secure the protection structure to the porch. To install the protection structure, the structure is deployed and lowered subsea towards the horizontal connection system incorporating the modified flow access jumper pulling head. Using an ROV or otherwise, the elongate members of each part of the protection structure are slotted into the receptacles in the horizontal connection porch. In addition, the body of the jumper pulling head comprises an outer profile which corresponds to the outer profile of the bottom edge of each part of the protection structure, such that the protection structure fits in place on the jumper pulling head. The protection structure may be secured to the jumper pulling head by any additional means, as necessary.

One installed, each elongate member is permitted to rotate within the receptacles of the porch, thus allowing the protection structure to be opened and closed. With the two parts of the protection structure opened, the modified flow access jumper pulling head is ready to receive a subsea process or intervention apparatus. A subsea process or intervention apparatus is therefore installed upon the flow access interface of the jumper pulling head.

The protection structure of the jumper pulling head can be closed around the subsea process or intervention apparatus to protect the apparatus in use. With the subsea process or intervention apparatus in place, processing or intervention operations can now be performed upon the flow system at the convenient location of the horizontal connection system.

An advantage of a modified flow access jumper pulling head of this type is that by using such a jumper pulling head, an access point can be provided regardless of whether or not its immediate use is required. If it is not desirable to carry out flow access operations immediately, the flow access interface may be provided with a cap, or an addition flow piece which connects the dual bores in the flow access interface. However, installation of such a modified flow access jumper pulling head provides the opportunity to access the flow system via this apparatus in the future, if and when required.

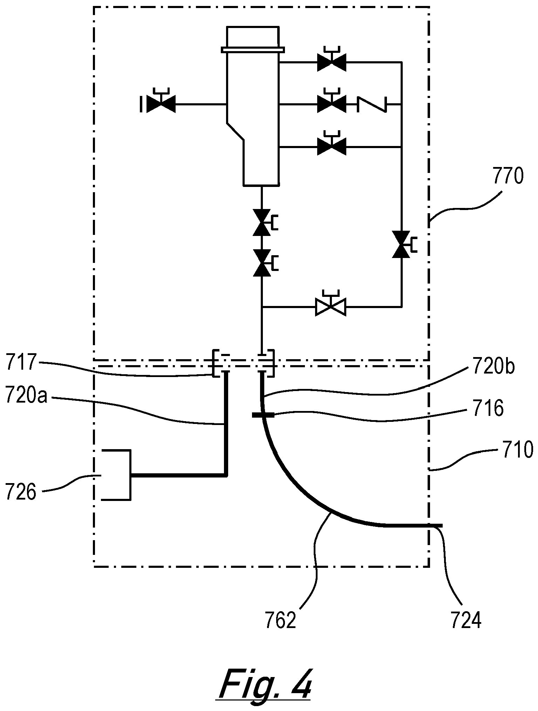

Another advantage of this type of modified flow access jumper pulling head, is that it facilitates flow access for a range of mechanical intervention operations to be performed. Referring now to Figure 4, a schematic diagram is shown of a modified flow access jumper pulling head, similar to that which has been described above. Figure 4 shows a jumper pulling head 710 which is substantially similar to that described above. However, this jumper pulling head can be used in subsea applications where mechanical intervention is, or is expected to be, required.

In addition to the flow line 720a which provides a flow path between the horizontally oriented opening 726 and the flow access interface 717, flow path 720b is also provided which is vertically oriented between the connector and the flow access interface 717.

One advantage of the substantially vertical orientation of flow path 720b is that its configuration permits mechanical intervention operations to be performed within the flow path. In the embodiment shown, the configuration of the jumper pulling head, and of the flow access hub therein, enables the installation of jumper flowline 724 which comprises a bend 762. A flow path which comprises a bend 762 is therefore defined between the flow access interface 717 and the flow system.

In this example, the bend 762 is a 5D bend, which means that the radius of the bend is 5 times the nominal diameter of the bore. This configuration of bend makes it possible to perform mechanical intervention operations through the flowline, as its shape will permit the passage of a range of standard mechanical intervention tools and/or equipment.

By utilizing a jumper pulling head which facilitates a bend in the flowline, mechanical intervention operations can therefore be carried out by an intervention apparatus which is connected to the flow system via the flow access interface 717, at the location of a standard horizontal pull-in connection system.

In this embodiment, the mechanical intervention operation which is set-up is a pigging operation. A pig launcher module 770 is installed upon a flow access interface 717 which is defined by the modified flow access jumper pulling head 710. The flowline 720a is not utilized by the pig launcher module 770 in this instance, and thus comprises the necessary isolation valves (not shown) to safely isolate flow within this line whilst the pigging operation is ongoing.

As described above, flowline 720b is vertically oriented, and connected between the pig launcher module 770 via the dual bore flow access interface 717 and the flowline 724 via connector 716.

In operation, the pig launcher is used to deploy pipeline pigs into the flowline 720b, and consequently into the flowline 724, through which they are able to move safely and without obstruction due to the bend configuration of the flowline.

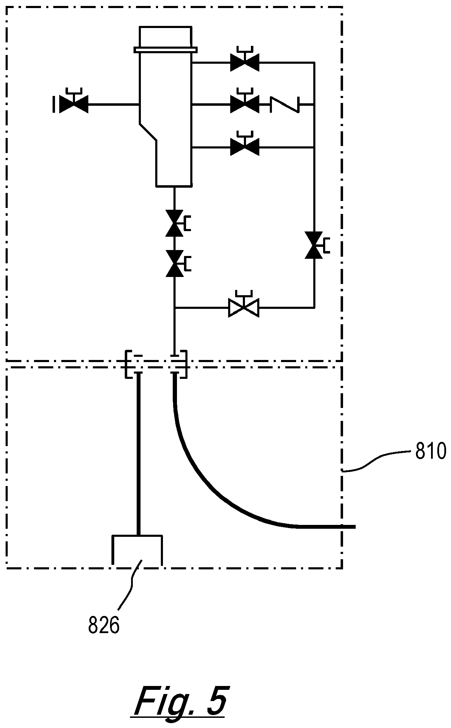

Figure 5 is a view of an alternative embodiment of the invention, in a similar mechanical intervention operation set-up to that described in Figure 4. However, in this embodiment the flow access jumper pulling head 810 is a flow access jumper pulling head for vertical connection to a subsea Christmas tree, and includes a connector 826 which has its longitudinal axis oriented in the vertical plane to connect to a vertical flowline, such as a vertical flowline of a subsea Christmas tree (not shown).

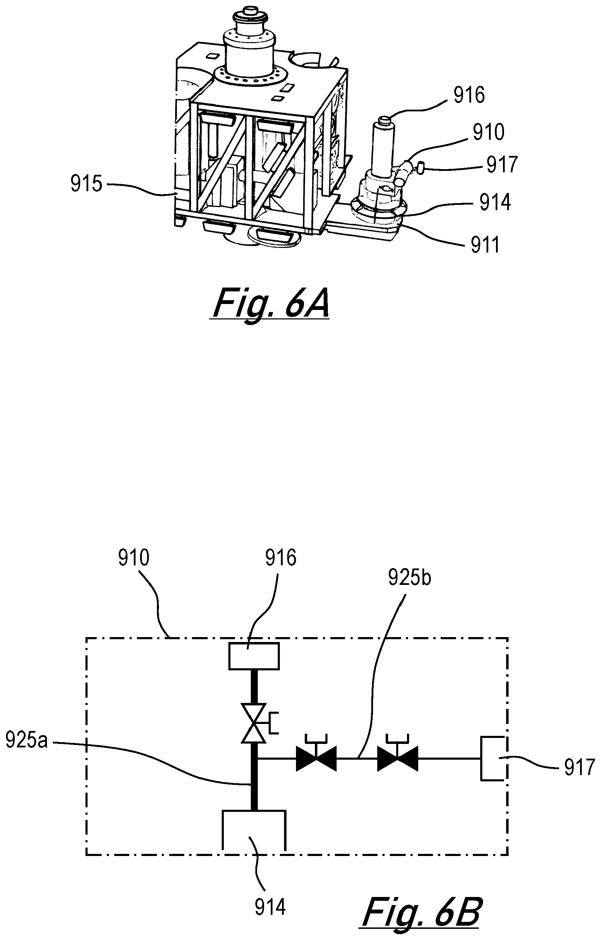

Other embodiments of the invention also relate to vertical applications of flow access apparatus. For example, referring to Figures 6A and 6B, the flow access apparatus shown generally at 910 is an intermediate flow access connector for vertical connection to a subsea Christmas tree. The flow access connector 910 comprises two connectors 914, 916, each having their longitudinal axis oriented in the vertical plane to connect to vertical flowlines. In this embodiment, the intermediate flow access connector 910 is connected to a vertical outlet 911 of a subsea Christmas tree via connector 914, and connector 916 is operable to be connected to a flowline, such as a jumper flowline and/or a flexible flowline.

The intermediate flow access connector 910 defines a flow path 925a between the two connectors 914, 916, which is fluidly connected by a flow path 925b to a flow access interface 917. The flow access interface 917 is a single bore interface which comprises a connector though which a processing and/or intervention apparatus may gain access to the flow system. The flow paths within the intermediate flow access connector 910 further comprise valves which can optionally control the direction of flow in the absence of a dual bore system. It will be appreciated that although the flow access interface 917 is shown to comprise a single standard connector, it may instead be provided in the form of an ROV hot stab connector.

In standard applications, where the intermediate flow access apparatus 910 is not provided, a flowline (not shown) would be directly connected to the vertical outlet 911 of the subsea Christmas tree. Therefore, to aid integration of the intermediate flow access apparatus 910, the connector 916 of the intermediate flow access connector 910 has been configured to substantially duplicate the connector 911 which is provided by the subsea tree.

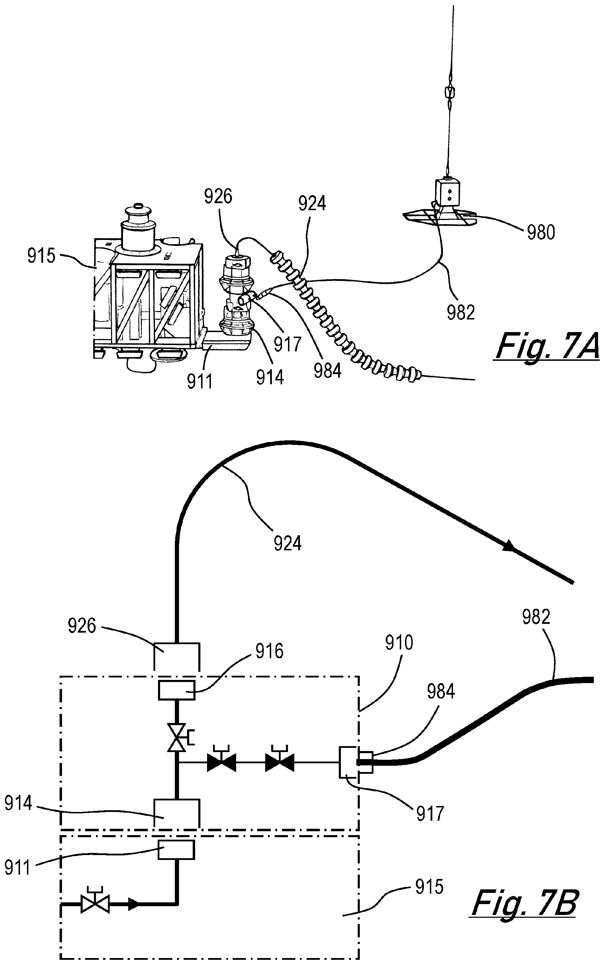

Figures 7A and 7B show the intermediate flow access connector 910 of Figures 6A and 6B connected to a processing or intervention apparatus 980 and a flexible flowline 924. The flexible flowline 924 is connected to the vertically oriented connector 916 of the intermediate flow access connector 910 which, as described above, mimics the configuration of the connector 911 of the subsea tree 915.

In addition, a processing or intervention apparatus 980 is connected to the flow access interface of the apparatus 917 via a flexible flowline 982 and a connector 984. As such, the processing or intervention apparatus 980 is not mounted on the flow access interface 917 in this embodiment, and is instead provided away from the apparatus 910.

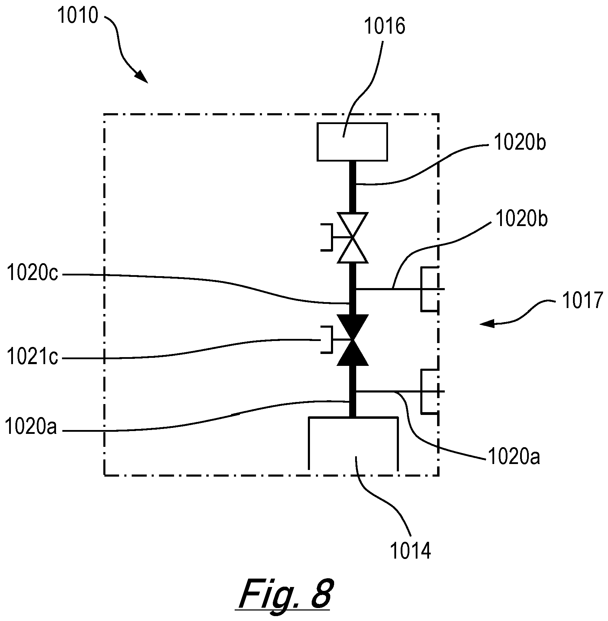

It will be equally appreciated that the vertical applications of a flow access apparatus which are described above may also incorporate flow access apparatus which, according to an alternative embodiment of the invention, provide dual bore flow access interfaces. For example, the flow access apparatus 1010 which is shown in Figure 8 has a flow access interface 1017 for dual bore access.

Although the flowlines 1020a and 1020b are connected to one another via flow line 1021c and therefore do not provide conventional, distinct dual bores through the apparatus 1010, valve 1021c may optionally be closed in order to separate these flow paths.

With the valve 1021c closed, a flow path 1020a is defined between the flow access interface 1017 and the connector 1014 and a flow path 1020b is defined between the interface 1017 and the connector 1016.

Although the foregoing embodiments relate primarily to the provision of an access interface for fluid or mechanical intervention, it will be appreciated that the principles of the invention can be applied to provide an access point for other applications, including for example the bringing together of two production flow streams. In particular, production flow from another subsea well (for example, from the production outlet of a subsea tree of the well) could be connected to the production flow line of an existing subsea manifold or subsea tree, using an access hub according to one or more of the foregoing embodiments of the invention. In such an application, it may be desirable to use a composite jumper hose for at least a part of the flow line from the other subsea well to the access hub, to reduce the loads on the access hub and the components of the subsea flow system to which it is connected.

In alternative embodiments, the access apparatus is configured with multiple flow lines or flow bores extending therethrough, to correspond to multiple flow lines or flow bores present in the flow system. For example, a connector on a subsea tree may incorporate production flow lines and injection flow lines, and the jumper may be similarly configured. The access apparatus may comprise a set of parallel flow lines configured for connection of the respective lines between the subsea tree and the jumper, and at least one of the parallel flow lines may be provided with an access point for fluid or mechanical intervention, or as an access point for another flow stream directed in or out of the flow system (e.g. production fluid being brought in from another subsea tree).

Although not shown, it will also be appreciated that the flow access apparatus and equipment which have been described in the foregoing description, along with the flow modules, flow components, Christmas trees and the like, may be provided with additional arrangements of valves and flowlines as necessary.

Various modifications may be made within the scope of the invention as herein intended, and embodiments of the invention may include combinations of features other than those expressly described herein.

The present application is a divisional application relating to earlier filed patent application number EP19717347.9. The following clauses correspond to the claims of the earlier patent application as filed and, whether explicitly recited in the claims or not, describe further aspects of the invention:
A. An access apparatus for accessing a flow system in a subsea oil and gas production installation, the access apparatus comprising:
   a body;
   a plurality of connectors configured to connect the apparatus to the flow system; and
   an access interface providing an access point to the flow system;
   wherein the body defines at least one bore which fluidly connects at least one of the plurality of connectors to the access interface to provide a path between the access interface and the flow system;
   wherein a first connector of the plurality of connectors is oriented with a longitudinal axis in a substantially horizontal plane, such that the at least one connector is configured to connect to a respective horizontally oriented connector of the flow system;
   wherein a second connector of the plurality of connectors forms part of a connection interface for a jumper flowline, the connection interface replicating a flow system connection interface;
   and wherein the access apparatus is configured to be connected between the flow system connection interface and the jumper flowline.
B. The access apparatus according to clause A, wherein the flow system connection interface is a part of a subsea horizontal pull-in connection system.
C. The access apparatus according to clause A or clause B, wherein the access apparatus is a termination head for a jumper flowline.
D. The access apparatus according to any of clauses A to C, wherein the access apparatus is a jumper pulling head for a jumper flowline.
E. The access apparatus according to any preceding clause, wherein the at least one bore is a first bore which defined between the first connector and the access interface, and wherein the body further defines a second bore between the second connector and the access interface.
F. The access apparatus according to any preceding clause, wherein the access interface provides an interface for processing equipment, intervention apparatus and/or additional flow lines or connectors to be landed on and connected to the apparatus.
G. The access apparatus according to clause F, wherein the access interface enables a variety of wellbore and/or flow system intervention operations to be performed.
H. The access apparatus according to any preceding clause, wherein the horizontally oriented connector of the flow system is a horizontal connector of a subsea manifold, a subsea tree and/or a subsea end termination.
I. The access apparatus according to any preceding clause, wherein the horizontally oriented connector of the flow system is a horizontal connection porch of a subsea manifold and/or a subsea Christmas tree.
J. The access apparatus according to any preceding clause, wherein the connection interface for a jumper flowline formed, or formed in part, by the second connector replicates the horizontally oriented connector of the flow system.
K. The access apparatus according to any preceding clause, wherein the connection interface for a jumper flowline formed, or formed in part, by the second connector replicates the outward interface of a horizontal connector of a subsea manifold and/or a subsea Christmas tree.
L. The access apparatus according to any preceding clause, wherein the second connector is oriented with a longitudinal axis substantially vertically, such that it is configured to connect to a respective vertically oriented, or vertically oriented in part, jumper flowline.
M. The access apparatus according to any preceding clause, wherein at least one bore of the access apparatus is configured to permit the passage of mechanical intervention equipment therethrough.
N. The access apparatus according to clause M, wherein the at least one bore of the access apparatus comprises a 5D bend.
O. The access apparatus according to any preceding clause, comprising elongate guide members which correspond to the position of receptacles on the horizontally oriented connector of the flow system, which are configured to extend into the receptacles on the horizontally oriented connector of the flow system when the components are connected.
P. The access apparatus according to any of clauses A to O comprising recesses which correspond to the position of elongate guide probes of a pull in tool and of receptacles on the horizontally oriented connector of the flow system.
Q. A method of installing an access apparatus between the components of a subsea horizontal connection system, the method comprising:
   providing an access apparatus comprising a plurality of connectors configured to connect the apparatus to the flow system and an access interface for providing an access point to the flow system;
   disconnecting a jumper flowline from a horizontally oriented connector of the flow system;
   providing the flow access apparatus at a subsea location proximate the location of the horizontally oriented connector of the flow system;
   bringing the access apparatus into contact with the horizontally oriented connector of the flow system such that a first connector of the plurality of connectors of the flow access apparatus is brought into contact with a flow opening in the horizontally oriented connector; and
   re-connecting the jumper flowline to the subsea horizontal connection system, by bringing it into contact with the access apparatus such that a second connector of the plurality of connectors of the access apparatus is brought into contact with a flow opening in the jumper flowline.
R. The method according to clause Q, wherein the subsea horizontal connection system is a pull-in horizontal connection system.
S. The method according to clause Q or clause R, wherein the steps of disconnecting the jumper flowline, providing the access apparatus at a subsea location, bringing the access apparatus into contact with the horizontally oriented connector of the flow system and/or re-connecting the jumper flowline may be carried out at least by Remotely Operated Vehicles (ROVs), winches, hydraulic cylinder tools, Pull in Tools (PITs) and/or any other necessary installation tools and/or a combination thereof.
T. The method according to any of clauses Q to S, wherein the access apparatus comprises elongate guide members which correspond to the position of receptacles on the horizontally oriented connector of the flow system, and wherein the method comprises bringing the access apparatus into contact with the horizontally oriented connector of the flow system such that the elongate guide members of the access apparatus extend into the corresponding receptacles of the horizontally oriented connector of the flow system.
U. The method according to any of clauses Q to T, wherein the access apparatus comprises recesses which correspond to the position of elongate guide probes of a pull in tool and of receptacles on the horizontally oriented connector of the flow system, and wherein the method comprises docking the access apparatus on the pull in tool such that the elongate guide probes enter and extend through the recesses of the access apparatus.
V. The method according to clause U, further comprising bringing the access apparatus into contact with the horizontally oriented connector of the flow system such that the elongate guide probes of the pull in tool extend into the corresponding receptacles of the horizontally oriented connector of the flow system.
W. The method according to clause V, further comprising un-docking and removing the pull in tool from the access apparatus and the horizontally oriented connector of the flow system.
X. A subsea horizontal connection installation comprising:
   a flow system comprising a horizontally oriented connector forming part of the flow system and a jumper flowline; and
   an access apparatus comprising a body, a plurality of connectors configured to connect the apparatus to the flow system and an access interface for providing an access point to the flow system;
   wherein the body defines at least one bore which fluidly connects at least one of the plurality of connectors to the access interface to provide a path between the access interface and the flow system;
   wherein a first connector of the plurality of connectors of the access apparatus is connected to the horizontally oriented connector of the flow system; and
   wherein a second connector of the plurality of connectors of the access apparatus is connected to the jumper flowline.
Y. The installation according to X, wherein the installation further comprises processing equipment, intervention apparatus and/or additional flow lines or connectors connected to the access interface.

## Claims

1. An access jumper pulling head for accessing a flow system in a subsea oil and gas production installation comprising a subsea horizontal pull-in connection system, the access jumper pulling head comprising:
a body comprising a plurality of connectors; and
an access interface for providing an access point to the flow system;
wherein a first connector of the plurality of connectors is configured to connect the access jumper pulling head to a jumper flowline and a second connector of the plurality of connectors is configured to connect the access jumper pulling head to the horizontal pull-in connection system of the flow system;
wherein the body defines at least one bore which fluidly connects at least one of the plurality of connectors to the access interface to provide a flow path between the access interface and the flow system; and
wherein the access jumper pulling head is configured to be connected to the horizontal pull-in connection system of the flow system using a pull in tool.

2. The access jumper pulling head according to claim 1, wherein the at least one bore is a first bore which is defined between the first connector and the access interface, and wherein the body further defines a second bore between the second connector and the access interface.

3. The access jumper pulling head according to claim 1 or claim 2, wherein the access interface provides an interface for processing equipment, intervention apparatus and/or additional flow lines or connectors to be landed on and connected to the access jumper pulling head.

4. The access jumper pulling head according to any preceding claim, wherein the second connector of the plurality of connectors is configured to connect the access jumper pulling head to a horizontally oriented connector of a subsea manifold, a subsea tree and/or a subsea end termination.

5. The access jumper pulling head according to any preceding claim, further comprising a protection structure having an open condition and a closed condition, wherein in the open condition, the protection structure allows processing equipment, intervention apparatus and/or additional flow lines or connectors to be connected to the access interface of the access jumper pulling head and wherein in the closed condition, the protection structure protects the access jumper pulling head and/or the processing equipment, intervention apparatus and/or additional flow lines or connectors.

6. The access jumper pulling head according to any preceding, comprising elongate guide members which correspond to receptacles of a horizontally oriented connector of the horizontal pull-in connection system of the flow system, and which are configured to extend into the receptacles when the components are connected.

7. The access jumper pulling head according to any preceding claim, comprising recesses which correspond to elongate guide probes of a pull in tool.

8. A method of installing an access jumper pulling head between the components of a subsea horizontal pull-in connection system of a flow system in a subsea oil and gas production installation, the method comprising:
providing an access jumper pulling head comprising a body, a plurality of connectors and an access interface for providing an access point to the flow system, the body defining at least one bore which fluidly connects at least one of the plurality of connectors to the access interface;
connecting a jumper flowline to a first connector of the plurality of connectors of the access jumper pulling head;
locating the access jumper pulling head at a location proximate a horizontal connection point of a subsea manifold of the subsea horizontal pull-in connection system;
using a pull in tool, connecting a second connector of the plurality of connectors of the access jumper pulling head to the horizontal connection point of the subsea manifold.

9. The method according to claim 8, wherein the step of connecting the second connector of the plurality of connectors of the access jumper pulling head to the horizontal connection point of the subsea manifold is carried out additionally with the use of Remotely Operated Vehicles (ROVs), winches, hydraulic cylinder tools, and/or any other necessary installation tools and/or a combination thereof.

10. The method according to claim 8 or claim 9, wherein the access jumper pulling head comprises elongate guide members which correspond to receptacles of the horizontal connection point, and wherein the method comprises bringing the access jumper pulling head into contact with the horizontal connection point such that the elongate guide members of the access jumper pulling head extend into the corresponding receptacles.

11. The method according to any of claims 8 to 10, wherein the access jumper pulling head comprises recesses which correspond to elongate guide probes of a pull in tool and wherein the method comprises docking the access jumper pulling head on the pull in tool such that the elongate guide probes enter and extend through the recesses of the access jumper pulling head.

12. The method according to any of claims 8 to 11, further comprising un-docking and removing the pull in tool from the access jumper pulling head.

13. A subsea horizontal pull-in connection system of a flow system in a subsea oil and gas production installation comprising:
a subsea manifold having a horizontal connection point;
a jumper flowline; and
an access jumper pulling head comprising:
a body comprising a plurality of connectors; and
an access interface for providing an access point to the flow system;
wherein the body defines at least one bore which fluidly connects at least one of the plurality of connectors to the access interface;
wherein a first connector of the plurality of connectors of the access jumper pulling head is connected to the jumper flowline and a second connector of the plurality of connectors of the access jumper pulling head is connected to the horizontal connection point of the subsea manifold of the subsea horizontal pull-in connection system.

14. The installation according to claim 13, wherein the installation further comprises processing equipment, intervention apparatus and/or additional flow lines or connectors connected to the access interface.

15. The installation according to claim 13 or claim 14, wherein the access jumper pulling head further comprises a protection structure having an open condition and a closed condition, wherein in the open condition, the protection structure allows processing equipment, intervention apparatus and/or additional flow lines or connectors to be connected to the access interface of the access jumper pulling head and wherein in the closed condition, the protection structure protects the access jumper pulling head and/or the processing equipment, intervention apparatus and/or additional flow lines or connectors.
